# EUROPÄISCHE PATENTANMELDUNG

(11) **EP 2 608 026 A1**
(43) Veröffentlichungstag der Anmeldung: **26.06.2013**
(21) Anmeldenummer: 12197146.9
(22) Anmeldetag: 14.12.2012
(51) Int. Cl.: G06F 9/44

(54) **Verfahren zur Generierung eines Software-Moduls für ein Feldgerät aus einer Gerätebeschreibungsdatei sowie Gerätebeschreibungsdatei**

(30) Priorität: 16.12.2011 DE 102011056562
(71) Anmelder: SCHNEIDER ELECTRIC AUTOMATION GMBH, 97828 Marktheidenfeld (DE)
(72) Erfinder: Patri, Michael, 63741 Aschaffenburg (DE)
(74) Vertreter: Stoffregen, Hans-Herbert

(57) **Zusammenfassung**

Die Erfindung bezieht sich auf ein Verfahren zur Generierung eines Software-Moduls (SM) wie Geräte-DTM für ein Feldgerät (DT1) aus einer Gerätebeschreibungsdatei (DD), wobei in der Gerätebeschreibungsdatei (DD) Geräte-Parameter (DP) definiert sind und wobei das Software-Modul (SM) Daten und Funktionen des Feldgerätes (DT1) kapselt und grafische Bedienelemente bereitstellt und wobei das Software-Modul (SM) mittels eines Generator-Tool (GT) aus der Gerätebeschreibungsdatei (DD) generiert wird. Um eine automatische parameter-spezifische Generierung eines Geräte-DTMs zu ermöglichen, ist vorgesehen, dass als Gerätebeschreibungsdatei (DD) eine erweiterte Gerätebeschreibungsdatei (DDS) verwendet wird, in der für einen oder mehrere Geräte-Parameter (DP) der Gerätebeschreibungsdatei (DD) jeweils eine definierte Geräte-Parameter-Semantik (DPS) zugeordnet ist, dass die erweiterte Gerätebeschreibungsdatei (DDS) durch das Generator-Tool (GT) ausgewertet wird, wobei für jeden Geräte-Parameter (DP) geprüft wird, ob eine Geräte-Parameter-Semantik (DPS) vorliegt, dass die Geräte-Parameter-Semantiken (DPS) der Geräte-Parameter (DP) mittels des Generator-Tools (GT) ausgewertet werden und dass entsprechend der Geräte-Parameter-Semantiken (DPS) ein parameter-semantik-spezifisches Software-Modul (SM) generiert wird.

## Beschreibung

Die Erfindung bezieht sich auf ein Verfahren zur Generierung eines Software-Moduls für ein Feldgerät aus einer Gerätebeschreibungsdatei, wobei in der Gerätebeschreibungsdatei Geräte-Parameter definiert sind und wobei das Software-Modul Daten und Funktionen des Feldgerätes kapselt und grafische Bedienelemente bereitstellt und wobei das Software-Modul mittels eines Generator-Tool aus der Gerätebeschreibungsdatei generiert wird sowie auf eine Gerätebeschreibungsdatei zum Abbilden von Geräte-Parametern eines Feldgerätes in einem Software-Modul wie Geräte-DTM mittels eines Generator-Tools, wobei in der Gerätebeschreibungsdatei Geräte-Parameter definiert sind.

Die EP 1 658 538 B1 offenbart ein Verfahren zum Erzeugen von Software-Modulen für Feldgeräte der Prozessautomatisierungstechnik mittels Gerätebeschreibungen. Derartige Software-Module kapseln alle Daten und Funktionen des entsprechenden Feldgerätes und weisen definierte Schnittstellen zu Anwendungsprogrammen in Prozessleitsystemen auf. Nach dem Stand der Technik ist vorgesehen, dass beispielsweise aus PDM-Gerätebeschreibungen, HCF-Gerätebeschreibungen oder firmenspezifischen elektronischen Gerätebeschreibungen für Feldgeräte syntaktisch und semantisch korrekte Standard-Gerätebeschreibungen mittels eines ersten Compilers erzeugt werden und dass die syntaktisch und semantisch korrekten Standard-Gerätebeschreibungen mittels eines zweiten Compilers in die entsprechenden Software-Module umgewandelt werden.

Syntaktisch und semantisch korrekte Standard-Gerätebeschreibung bedeutet, dass sowohl die Form als auch die Bedeutung der einzelnen enthaltenen Gerätebeschreibungsobjekte durch eine Gerätebeschreibungsdefinition wie z. B. IEC61804 für EDDL oder IS015745 festgelegt ist. Durch die Gerätebeschreibungsdefinition ist genau festgelegt, wie die Struktur der Gerätebeschreibung auszusehen hat und wie die einzelnen Beschreibungsobjekte zu interpretieren sind.

In H. Erlenkötter: "XML Extensible Markup Language; Von Anfang an", Rowohlt Taschenbuch Verlag, 2. Auflage, 2008, ist das Vordefinieren von Parametern und Gruppen von Parametern als Parameter-Profil bekannt, beispielsweise über XSD- oder DTD-Daten, um korrekte Daten und Datengruppen zu definieren.

In Y. Kotb u. a. "A Practical Example of XML Semantics", 2003, Parallel and Distributed Computing, Applications and Technologies, ISBN: 0-7803-7840-7, Seite 146 bis 150, ist das Zuordnen von definierten Semantikinformationen als Attribute von XML-Daten bekannt. In dieser Druckschrift wird die Semantik mittels Zuhilfenahme einer neuen Beschreibungssprache, nämlich SLXS, beschrieben. Allerdings können nur Beziehungen zwischen einzelnen XML-Elementen semantisch beschrieben werden. Durch die Beschreibung der semantischen Beziehungen mittels SLXS können zwar semantische Beziehungen innerhalb von XML-Dateien bzw. über mehrere XML-Dateien hinweg beschrieben werden, ohne dass jedoch die Semantik der jeweiligen Parameterinhalte beschrieben ist.

In der DE 10 2008 038 501 A1 ist ein Verfahren zur Generierung einer Gerätebeschreibungsdatei beschrieben.

Dabei wird mindestens eine statische Datenstruktur eines Feldgerätes bestimmt, wobei in der statischen Datenstruktur jeweils mehrere Parameter des Feldgerätes zusammengefasst sind. Beim Einsatz des Feldgerätes werden Parametrier-Informationen zu der Mehrzahl von Parametern, die in einer gemeinsamen statischen Datenstruktur zusammengefasst sind, in einem gemeinsamen Datenstruktur-Telegramm über eine digitale Kommunikationsschnittstelle des Feldgerätes übermittelt. Das Verfahren umfasst das Erfassen einer Mehrzahl von Parametern des Feldgerätes in einer Datenbank, das Eingeben von Parametern, die in einem Parametrier-Werkzeug zusammen darzustellen sind, sowie das automatisierte Zusammenfassen der eingegebenen Parameter und deren abhängige Parameter in mindestens eine statische Datenstruktur durch die datenverarbeitende Einheit basierend auf in der Datenbank erfassten Informationen zu den eingegebenen Parametern.

In einem Automatisierungssystem sind die Feldgeräte wie beispielsweise Sensoren und/oder Aktoren über Bus-Systeme wie CANopen, ProfiNet oder EtherNet/IP mit einer übergeordneten Steuereinheit und/oder einem Hostsystem verbunden. Die übergeordnete Steuereinheit dient u. a. zur Prozesssteuerung, Prozessvisualisierung, Prozessüberwachung sowie zur Inbetriebnahme der Feldgeräte.

Die einzelnen Feldgeräte müssen vor ihrem Einsatz für die jeweilige Anwendung konfiguriert werden, damit sie innerhalb des Automatisierungssystems eine gewünschte Funktion ausführen. Hierzu müssen einzelne Parameter, die in dem Feldgerät vorgesehen sind, eingestellt werden. Parameter eines Feldgeräts wie beispielsweise einer Motorsteuerung sind z. B. Strom-, Spannungs- sowie Frequenzwerte eines anzusteuernden Antriebs, wobei diese Parameter je nach Gerät und Gerätebeschreibung unterschiedliche Bezeichner haben können, z. B. Strom, Current, I, Ia, IphaseA etc.

In einem spezifischen Konfigurations-Werkzeug (configuration tool) erfolgt die Konfiguration, welche Daten zwischen den Feldgeräten bzw. zwischen dem Feldgerät und der übergeordneten Steuereinheit ausgetauscht werden. Das Konfigurations-Werkzeug muss die Fähigkeiten und funktionalen Merkmale des verwendeten Feldgerätes kennen, die in der sogenannten Gerätebeschreibungsdatei beschrieben sind.

Die Gerätebeschreibungsdatei beschreibt einen Feldgeräte-Typ z. B. entsprechend allgemeiner Information, dessen Kommunikationseigenschaften sowie die von dem Feldgerät bereitgestellten Daten.

Bekannte Gerätebeschreibungsdatei-Formate sind z. B. FDCML (Field Device Configuration Markup Language), eine systemneutrale XML-Beschreibung für Automatisierungskomponenten und DDXML (Device Description eXtensible Markup Language), eine auf dem ISO 15745 Standard basierende XML-Beschreibung. Eine weitere Gerätebeschreibungssprache ist EDDL (Electronic Device Description Language), welche eine ASCII-Beschreibungsdatei basierend auf IEC 61804 liefert.

XML ist eine allgemein anerkannte Technologie zum maschinellen Informationsaustausch. Damit wird eine gemeinsame Basis zur Informationsintegration zur Verfügung gestellt.

Eine Technologie zur Bedienung von Feldgeräten innerhalb eines Steuerungssystems und/oder innerhalb eines Anzeigesystems ist beispielsweise das FDT/DTM-Konzept. Dieses ist durch die FDT (Field Device Tool) -Spezifikation der FDT-Gruppe definiert. Das FDT -Konzept ist unabhängig von der verwendeten Kommunikationstechnik.

Das Feldgerät wird repräsentiert durch ein Geräte-DTM (DTM: "Device Typ Manager") vergleichbar mit einem Gerätetreiber, der meist von dem Hersteller des Feldgerätes bereitgestellt wird und der die Logik und die Parameter des Feldgerätes repräsentiert und der zu der Anbindung des Feldgerätes an das Steuer- und/oder Anzeigesystem verwendet werden kann. Der DTM ist dabei eine gerätespezifische Software, die Daten und Funktionen des Feldgerätes kapselt und grafische Bedienelemente bereitstellt. Solch ein Gerätetreiber benötigt zur Ausführung eine entsprechende Rahmenapplikation, beispielsweise benötigt ein "Device Type Manager" zur Ausführung eine FDT-Rahmenapplikation (FDT: Field Device Tool). Ein Engineering-Werkzeug kann beispielsweise solch eine Rahmenapplikation für einen Geräte-DTM eines Feldgerätes bilden.

Die DTMs haben eine definierte Schnittstelle zu der FDT-Rahmenapplikation und können in jeder dieser FDT-Rahmenapplikationen verwendet werden. Ein Kommunikations-DTM repräsentiert eine Kommunikationsschnittstelle, welches die Verbindung zwischen einem Feldgerät und einem Feldbus herstellt. Dabei ist das Kommunikations-DTM eine Schnittstelle zu dem Feldbus, über die auf die angeschlossenen Feldgeräte zugegriffen werden kann.

Die Gerätebeschreibungsdatei kann verwendet werden, um einfache Geräte-DTMs für den beschriebenen Gerätetyp zu generieren. Zur Erzeugung von Geräte-DTMs sind mehrere Generierungs-Werkzeuge verfügbar, die automatisch ein Geräte-DTM aus einer Gerätebeschreibung erstellen.

In der DE 10 2008 038 501 A1 wird vorgeschlagen, zur besseren Lesbarkeit und Strukturierung von Geräte-Parametern mehrere Parameter in eine Gruppe zusammenzufassen. Dies vereinfacht die spätere Handhabung des Feldgerätes, um nicht mit jedem einzelnen Parameter arbeiten zu müssen.

Die Gruppierung von Parametern wird üblicherweise für jeden Feldgeräte-Typ spezifisch durchgeführt. Die Gruppierung unterscheidet sich für jeden Feldgeräte-Typ, wobei die Benennung der Parameter, die Sequenz der Parameter sowie der Inhalt der Parameter differieren können. Bei Feldgeräte-Typen, die dieselben Parameter wie beispielsweise Strom Phase A, Spannung Phase A und Frequenz haben, können diese anders benannt sein, so dass die Gruppierung hinsichtlich der verwendeten Namen unterschiedlich ist.

Da die Parameter innerhalb einer Gruppe von dem Feldgeräte-Typ abhängen, kann eine semantische Information nur innerhalb des Namens des Parameters vergeben werden. Daher ist eine automatische Behandlung der Daten nicht möglich, da insbesondere zuviel Aufwand betrieben werden müsste, um diese Parameterdaten automatisch zu bearbeiten.

Daher ist es nicht möglich, ein komplexes DTM für ein Feldgerät zu generieren, das eine geeignete grafische Benutzeroberfläche (GUI: Graphical User Interface) für die Parameter zur Verfügung stellt.

Davon ausgehend liegt der vorliegenden Erfindung die Aufgabe zugrunde, ein Verfahren der eingangs genannten Art und eine Gerätebeschreibungsdatei zur Durchführung des Verfahrens derart weiterzubilden, dass eine automatische parameter-spezifische Generierung eines Geräte-DTMs ermöglicht wird.

Die Aufgabe wird erfindungsgemäß u. a. durch ein Verfahren gelöst, welches sich dadurch auszeichnet, dass als Gerätebeschreibungsdatei eine erweiterte Gerätebeschreibungsdatei verwendet wird, in der für einen oder mehrere Geräte-Parameter der Gerätebeschreibungsdatei jeweils eine definierte Geräte-Parameter-Semantik zugeordnet ist, dass die erweiterte Gerätebeschreibungsdatei durch das Generator-Tool ausgewertet wird, wobei für jeden Geräte-Parameter geprüft wird, ob eine Geräte-Parameter-Semantik vorliegt, dass die Geräte-Parameter-Semantiken der Geräte-Parameter mittels des Generator-Tools ausgewertet werden und dass entsprechend der Geräte-Parameter-Semantiken ein parameter-semantik-spezifisches Software-Modul generiert wird.

Der Erfindung liegt die Idee zugrunde, zuvor definierte Geräte-Parameter-Semantiken bezüglich über ein Kommunikations-Protokoll austauschbarer Geräte-Parameter in die Gerätebeschreibungsdatei einzubinden. Dabei wird definiert beschrieben, was die über ein Kommunikations-Protokoll auszutauschenden Geräte-Parameter bedeuten. Zum Beispiel wird einem über ein Kommunikations-Protokoll wie Profibus auszutauschenden Wert "12" die Bedeutung "Wirkleistung" zugeordnet.

Durch die Bekanntgabe der Geräte-Parameter-Semantik des jeweiligen Geräte-Parameters kann eine automatische Weiterverarbeitung der in der Gerätebeschreibungsdatei enthaltenen Geräte-Parameter erfolgen.

Nach dem Stand der Technik erfolgt die Interpretation eines übertragenen Wertes durch das implizite Semantik-Wissen eines Benutzers oder innerhalb eines für das verwendete Gerät zugeschnittenen Software-Werkzeugs. Eine einheitliche und definierte Beschreibung der Semantik für heterogene Geräte und daraus für heterogene Geräte-Parameter ist aus dem Stand der Technik bisher nicht bekannt. Eine Beschreibung, welche Semantik (Bedeutung) die über ein Kommunikations-Protokoll auszutauschenden Geräte-Parameter haben, ist in den einzelnen Gerätebeschreibungsdefinitionen nicht enthalten.

Durch die Bekanntgabe der Geräte-Parameter-Semantik ist eine automatisierte Weiterverarbeitung in einem Software-Werkzeug wie Generator-Tool möglich. Im Bereich der Geräteintegration mittels der FDT/DTM-Technologie ist es dadurch möglich, spezielle Ausprägungen, insbesondere geräte-parameter-spezifische Geräte-DTM automatisch zu generieren.

Bei einer bevorzugten Ausführungsform kann auf der Grundlage der Geräte-Parameter-Semantik z. B. aus einer Datenbank ein der Semantik entsprechendes grafisches Element ausgelesen und in dem generierten Geräte-DTM angezeigt werden. Hierzu ist vorgesehen, dass jeder Geräte-Parameter-Semantik oder einer Gruppe von Geräte-Parameter-Semantiken eine Information zugordnet ist, die vorzugsweise in einer Datenbank abgelegt ist, und dass das Generator-Tool zur Generierung des parameter-semantik-spezifischen Software-Moduls in Form eines Geräte-DTMs die dem Geräte-Parameter zugeordnete Information abruft.

Eine weitere bevorzugte Ausführungsform zeichnet sich dadurch aus, dass die der Geräte-Parameter-Semantik oder einer Gruppe von Geräte-Parameter-Semantiken zugeordnete Information ein grafisches Objekt und/oder ein akustisches Objekt und/oder ein Algorithmus ist.

Vorzugsweise ist das grafische Objekt eine parameter-semantik-spezifische Benutzeroberfläche. Mittels des Algorithmus können ein oder mehrere Parameter in Abhängigkeit ihrer Parameter-Semantik in einer Kontrolleinheit mathematisch verknüpft werden.

Des Weiteren ist vorgesehen, dass für jeden Geräte-Parameter der erweiterten Gerätebeschreibungsdatei überprüft wird, ob eine entsprechende Geräte-Parameter-Semantik in der Gerätebeschreibungsdatei enthalten ist und dass dann, wenn eine Geräte-Parameter-Semantik nicht enthalten ist, eine manuelle Konfiguration des Geräte-Parameters erfolgt oder standardmäßig in dem Geräte-DTM repräsentiert wird.

Vorzugsweise kann eine Definition der möglichen Geräte-Parameter-Semantiken der Geräte-Parameter für die jeweiligen Anwendungsbereiche wie z. B. Motor-Parameter als Parameter-Profile zusammengefasst werden.

Eine Definition der möglichen Geräte-Parameter-Semantiken kann beispielsweise durch eine Erweiterung in einer Dokument-Typ-Definition (DTD), eine Erweiterung in einer XML-Schema-Definition (XSD), eine Erweiterung durch eine zusätzliche Dokument-Typ-Definition (DTD) sowie eine Erweiterung durch eine zusätzliche XML-Schema-Definition (XSD) erfolgen, wobei mehrere Profile in einer Gerätebeschreibungsdatei möglich sind.

Das erfindungsgemäße Verfahren zeichnet sich insbesondere durch nachfolgende Merkmale aus:
1. Integration einer Geräte-Parameter-Semantik in die Gerätebeschreibungsdatei in definierter Form,
2. die Auswertung der Geräte-Parameter-Semantik innerhalb eines Software-Werkzeugs wie Geräte-DTM-Generator,
3. Generieren eines Software-Moduls wie Geräte-DTM mit vorzugsweise parameterspezifischer Benutzeroberfläche (GUI: Graphical User Interface) unter Verwendung der Geräte-Parameter-Semantik der entsprechenden Geräte-Parameter.

Des Weiteren bezieht sich die Erfindung auf eine Gerätebeschreibungsdatei zum Abbilden von Geräte-Parametern eines Feldgerätes in einem Software-Modul, wie Geräte -DTM mittels eines Generator-Tools, wobei in der Gerätebeschreibungsdatei Geräte-Parameter definiert sind. Die Gerätebeschreibungsdatei zeichnet sich dadurch aus, dass einem oder mehreren der Geräte-Parameter eine definierte Geräte-Parameter-Semantik zugeordnet ist.

Bevorzugt weist die Gerätebeschreibungsdatei die vordefinierten Geräte-Parameter-Semantiken oder Gruppen von Geräte-Parameter-Semantiken in Form eines Parameter-Profils auf.

Zusätzlich zur Verwendung der Geräte-Parameter-Semantik bei einzelnen Geräte-Parametern ist es ebenfalls möglich, Parameter oder Gruppen von Parametern mit bekannter Semantik vorzudefinieren, so dass die vordefinierten Parameter oder Gruppen von Parametern in Form eines Parameter-Profils in die Gerätebeschreibungsdatei eingefügt und den Geräte-Parametern zugeordnet werden können. Dadurch ist die Semantik für jeden einzelnen Parameter innerhalb des vordefinierten Parameter-Profils bekannt und kann so auch geräteübergreifend verwendet werden um z. B. die Austauschbarkeit von Geräten zu verbessern.

Nach dem Stand der Technik muss die Semantik der Parameter gesondert ermittelt werden, z. B. aus einem Benutzerhandbuch.

Mit der bekannten Semantik können die Daten der Parameter automatisch verarbeitet werden, insbesondere deren Verwendung zum Zweck der grafischen Darstellung oder mathematischen Verknüpfung.

Durch die zusätzliche Gruppierung der Parameter-Profile kann z. B. ein komplexer Geräte-DTM automatisch generiert werden, welcher u. a. eine anspruchsvolle grafische Benutzeroberfläche (GUI) für die Parameter beinhaltet.

Die Daten eines Parameter-Profils sind vorzugsweise durch ein ergänzendes Profilschema, eine Dokument-Typ-Definition und/oder eine Gerätebeschreibung generierender Applikation beschrieben bzw. eingeschränkt.

Um dies zu erreichen, enthält die Gerätebeschreibungsdatei einen Bereich für Parameter-Gruppen, speziell für das Parameter-Profil, um die Parameter zu gruppieren. Das Parameter-Profil wird durch einen externen Standard beispielsweise in Form einer XSD-Datei oder DTD-Datei definiert. Die Definition wird auf alle Feldgeräte-Typen angewandt, welche die neuen Profile enthalten.

Die Parameter-Profile können unabhängig von dem Geräte-Typ übertragen werden, wobei die Semantik jeden Parameters bekannt ist und dadurch die Daten bei Bedarf automatisch verarbeitet werden können.

Andere Parameter, die nicht in dem Parameter-Profil enthalten sind, werden außerhalb des Profils in üblicher Weise übertragen.

Durch die Vordefinition von Parametern in einem Parameter-Profil wird der Vorteil erreicht, dass diese Parameter auch in unterschiedlichen Geräte-Typen dieselbe semantische Bedeutung haben.

Des Weiteren ist vorgesehen, dass die Gerätebeschreibungsdatei Profil-Schemata heranzieht, welche durch die Gerätebeschreibungsdatei unterstützt werden.

Als bevorzugte Ausführungsform wird eine XML-basierte Gerätebeschreibungsdatei verwendet. In diesem Fall wird das Profil als ergänzende XSD-Schema-Datei definiert, welche den Inhalt des Profils beschränkt.

Gemäß einer alternativen Ausführungsform des Verfahrens wird eine ASCII-basierte Gerätebeschreibungsdatei verwendet, wobei die Einfügung eines ergänzenden Profils mit einem geeigneten Werkzeug erfolgen kann.

Vorzugsweise wird als Gerätebeschreibungsdatei eine DDXML-Datei verwendet.

Bei Verwendung einer DDXML-Gerätebeschreibungsdatei wird als neues XML-Element ein Parameter-Gruppen-Profil in die DDXML-Gerätebeschreibungsdatei eingefügt. Das Parameter-Gruppen-Profil bearbeitet die Profil-Daten des Feldgerätes und unterscheidet sich von den spezifischen Geräte-Typ-Parametergruppen.

Durch Verwendung der zusätzlichen XSD-Schema-Datei für jedes Profil, welche das Profil beschreibt, sind die möglichen Parameter-Daten innerhalb eines Profils festgelegt und können innerhalb einer spezifischen Datenliste ausgesucht werden.

Durch Verwendung der XSD-Schema-Datei zur Definition des Profils zusätzlich zu der standardisierten XSD-Schema-Datei wird der Inhalt der Gerätebeschreibungsdatei auf zulässige bzw. erlaubte Daten zusätzlich eingeschränkt, die durch das zugehörige Profil definiert sind. Für jedes Profil kann eine separate Datei spezifiziert werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines bevorzugten Ausführungsbeispiels.

Es zeigen:
- Fig. 1: eine schematische Darstellung einer Datenübertragung zwischen Master und Feldgeräten nach dem Stand der Technik,
- Fig. 2: eine schematische Darstellung einer Datenübertragung zwischen Master und Feldgeräten auf der Basis von Parameter-Profilen,
- Fig. 3: eine Liste von Profil-Parameter-Gruppen innerhalb eines Profils in einer DDXML-Datei,
- Fig. 4: eine Struktur der DDXML-Datei,
- Fig. 5: eine Definition einer Gerätebeschreibungsdatei,
- Fig. 6: eine Liste vordefinierter Datenparameter,
- Fig. 7: eine Beschreibung einer Profil-Parameter-Gruppe,
- Fig. 8: eine Beschreibung einer Profil-Parameter-Gruppen-Definition,
- Fig. 9: eine Beschreibung von möglichen Energie-Messdaten innerhalb der zugehörigen Profil-Parameter-Gruppen,
- Fig. 10: eine schematische Darstellung der Erzeugung einer Gerätebeschreibungsdatei sowie Parametrierung eines Feldgerätes,
- Fig. 11: ein einer Geräte-Parameter-Semantik zugeordnetes grafisches Element,
- Fig. 12: eine schematische Darstellung zur Erzeugung eines Geräte-DTM,
- Fig. 13: ein Ablaufdiagramm zur Generierung eines parameter-spezifischen Geräte-DTM,
- Fig. 14: eine schematische Darstellung eines Verfahrens zur Verknüpfung von Geräte-Parametern auf der Basis Ihrer Geräte-Parameter-Semantik,
- Fig. 15: eine schematische Darstellung eines weiteren Verfahrens zur Generierung eines parameter-spezifischen Geräte-DTM und
- Fig. 16: ein Ablaufdiagramm eines Verfahrens zur Generierung eines parameter-spezifischen Geräte-DTM.

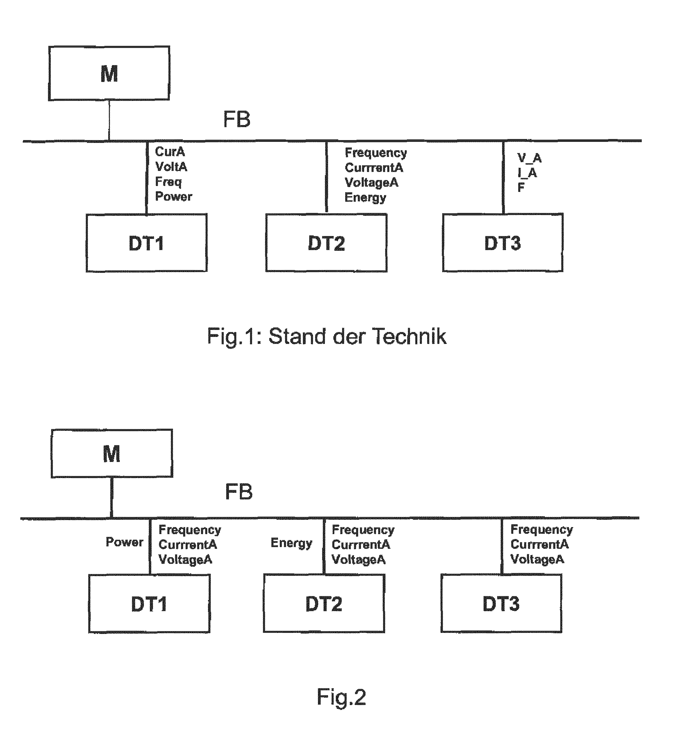

Fig. 1 zeigt schematisch eine Datenübertragung zwischen Feldgeräten DT1, DT2, DT3 und einer übergeordneten Steuereinheit M über einen Feldbus FB. Dabei werden Parameter wie CurA, VoltA, Freq, Power eines Gerätes DT1 beliebig zu einer Gruppe G1, Parameter wie Frequency, CurrentA, VoltageA, Energy eines Gerätes DT2 zu einer Gruppe G2 und Parameter wie V_A, I_A und F eines Gerätes DT3 als Parametergruppe G3 zusammengefasst. Die Gruppierung von Parametern wird dabei spezifisch für jeden Gerätetyp DT1, DT2, DT3 ausgeführt, wobei sich die Parameter jedes Gerätetyps voneinander unterscheiden, da der Name des Parameters, die Sequenz der Parameter und der Inhalt der Parameter unterschiedlich sein können. Sowohl die Benennung der Parameter als auch die Gruppierung der Parameter ist für jeden Gerätetyp DT1, DT2, DT3 unterschiedlich. Jeder Geräte-Typ DT1, DT2, DT3 überträgt unterschiedliche Daten.

Da die Parameter innerhalb einer Gruppe von dem jeweiligen Gerätetyp DT1, DT2, DT3 abhängen, kann eine Parameter-Semantik DPS nur implizit innerhalb eines Parameternamens gegeben sein, so dass eine automatische Überarbeitung der Datenparameter nicht möglich ist. Eine Konfigurationsapplikation könnte die Parameternamen CurA, CurrentA und I_A alle als Parameter interpretieren, die einen Stromwert übertragen, falls die Applikation diese Verbindung zwischen dem Namen und der Semantik herstellen kann. Weitere Informationen, die eine Interpretation der Parameter-Semantik erlauben, sind derzeit nicht in den Gerätebeschreibungen vorhanden.

Um jedoch komplexe Software-Module SM wie Gerätetreiber in Form eines Geräte-DTM (DTM: Device Typ Manager) für Geräte DT1, DT2, DT3 mit spezifischen grafischen Benutzeroberflächen (GUI - Graphical User Interface) -Elementen für die Parameter bereitzustellen, ist gemäß der Erfindung vorgesehen, vordefinierte Parameter-Semantiken DPS1...DPSn in Form von Parameter-Profilen DPP zu verwenden. Diese Semantiken DPS1...DPSn werden von den Geräte-Parametern DP1...DPn referenziert, wodurch eine Abstraktion der Parameterdaten erreicht wird und dadurch die Interpretation der Daten unabhängig von dem Gerätetyp DT1, DT2, DT3 erfolgen kann. Hierdurch ist eine bessere Austauschbarkeit des Gerätes gegeben. Durch die Bekanntgabe der Semantik wird ebenfalls der Vorteil erreicht, dass zugehörige Daten bei Bedarf automatisch bearbeitet werden können.

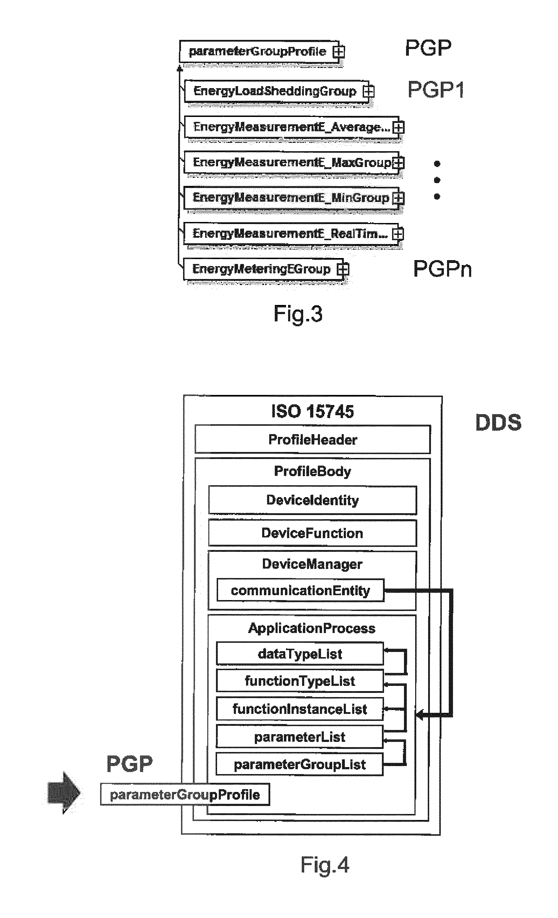

Ein Beispiel eines Parameter-Profils DPP in Form eines Parameter-Gruppen-Profils PGP ist in Fig. 3 dargestellt. Dieses kann mehrere Parametergruppenprofile PGP1...PGPn umfassen.

Das Parameter-Gruppen-Profil PGP kann in Form eines XML-Elementes in eine in Fig. 4 dargestellte erweiterte Gerätebeschreibungsdatei DDS eingefügt werden. In Fig. 4 ist rein beispielhaft eine Struktur der Gerätebeschreibungsdatei DDS als DDXML-Datei dargestellt. Dabei wird das Parameter-Gruppen-Profil PGP als XML-Element "parameterGroupProfile" eingefügt, welches die Profildaten des Gerätes behandelt und sich von den spezifischen Parameter-Gruppen des Gerätetyps unterscheidet.

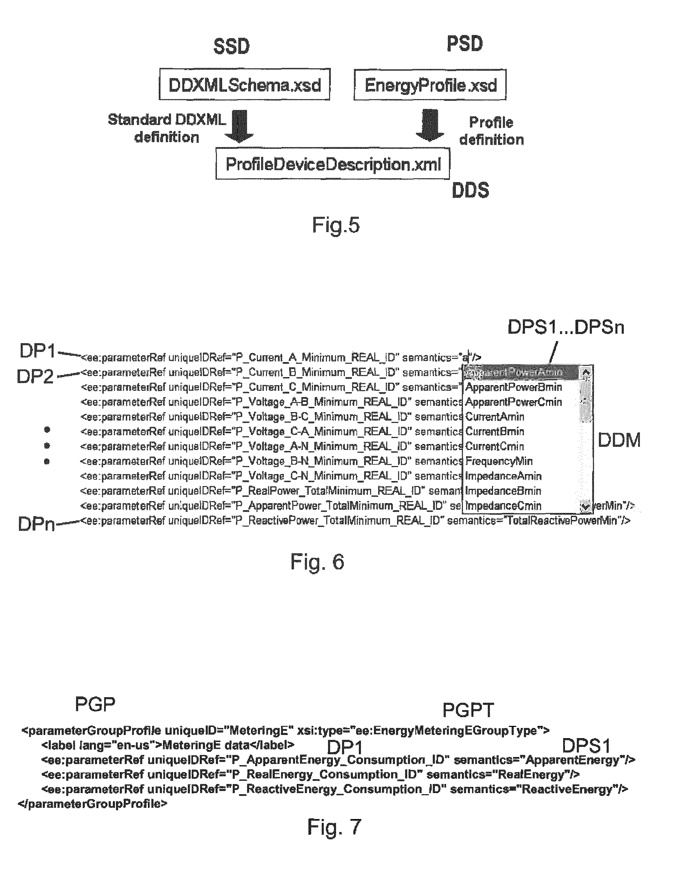

Fig. 5 zeigt rein schematisch die Gerätebeschreibungsdatei DDS als "ProfileDeviceDiscription.XML", welche über externe Dateien in Form einer Standard-DDXML-Schema-Datei SSD und einer Profil-Schema-Datei PSD definiert ist. Ergänzend zu der Standard-DDXML-Schema-Datei SSD ist die Profil-Schema-Datei PSD zugeordnet, über die das Parameter-Gruppen-Profil PGP definiert wird. Ergänzend sei erwähnt, dass mehrere Profil-Schema-Dateien PSD möglich sind, die jeweils für sich ein Profil definieren, um eine Gerätebeschreibungsdatei DDS zu erweitern

Das Parameter-Gruppen-Profil PGP umfasst Gruppierungen von Parametern oder einzelne Parameter sowie deren Semantiken, die in den jeweiligen Parametergruppenprofilen PGP1...PGPn vordefiniert sind. Dadurch wird der Vorteil erreicht, dass jedes Konfigurations-Werkzeug erkennen kann, was durch die Profil-Daten repräsentiert wird, so dass eine Standardisierung der zu übertragenden Daten erfolgen sowie eine Kompatibilität der nachgeordneten Kommunikation mit dem Profil in der Gerätebeschreibungsdatei hergestellt werden kann.

Durch das zusätzliche Profil-Schema PSD werden die Semantiken innerhalb des Profils PGP bzw. den Profil-Gruppen PGP1...PGPn beschrieben. Somit umfasst eine Gerätebeschreibung DDS sämtliche unterstützende Profil-Schemata PSD. Durch das DDXML-Schema sowie das Profil-Schema wird der Inhalt der Gerätebeschreibungsdatei DDS beschränkt.

Ein XML-Schema beschreibt in einer komplexen Schemasprache Datentypen, einzelne XML-Schema-Instanzen und Gruppen solcher Instanzen. Ein konkretes XML Schema wird auch als eine XSD (XML Schema Definition) bezeichnet und hat als Datei üblicherweise die Endung ".xsd". Im Gegensatz zu DTDs kann bei Verwendung von XML-Schemata zwischen dem Namen des XML-Typs und dem in der Instanz verwendeten Namen des XML-Tags unterschieden werden.

Fig. 6 zeigt rein schematisch vordefinierte Parameter DP1...DPn, wodurch die Parameter-Semantik DPS1...DPSn im Profil PGP vordefiniert wurde, wobei dem dem Parameter DP1...DPn entsprechenden Wert die Parameter-Semantik DPS zugeordnet wird. Die Zuordnung kann beispielsweise über ein Drop-Down-Menü DDM erfolgen.

Fig. 7 zeigt ein Beispiel eines Profil-Gruppen-Parameters PGP, wobei anzumerken ist, dass über das Element "uniqueIDRef" eine Referenz zu dem physikalischen Geräteparameter hergestellt wird und über das Element "semantics" eine Referenz zu den definierten Semantiken stattfindet. Die Profil-Gruppe PGP1 wird über den Element-Typ "xsi:type" referenziert, der hier auf den Profil-Gruppen-Parameter-Typ PGPT "ee:EnergyMeteringEGroupType" zeigt, wobei zusätzlich zu dem Profil-Gruppe-Parameter-Typ auch der Namensraum (XML-Namesspace) des Profils angegeben ist, hier "ee".

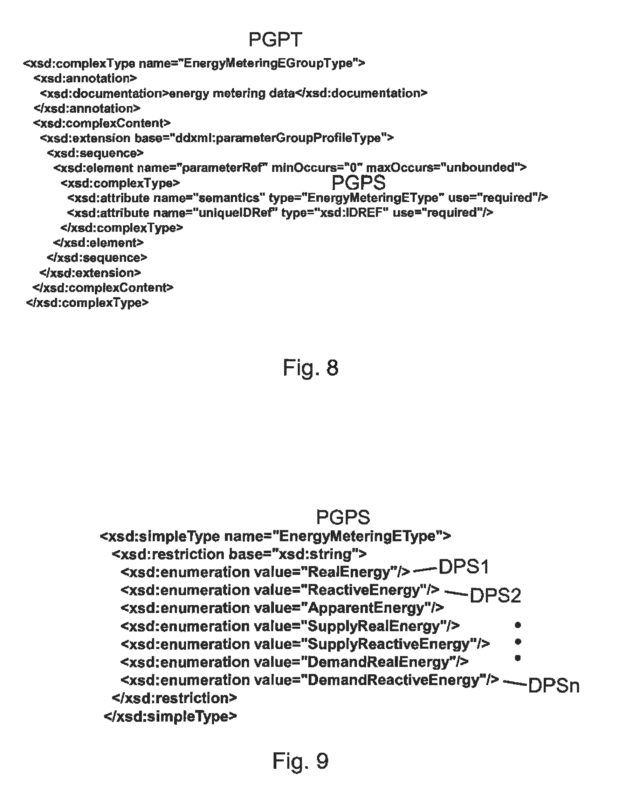

Fig. 8 zeigt beispielhaft den Aufbau einer Profil-Gruppen-Parameter-Definition ausgeprägt als Profil-Gruppen-Parameter-Typ PGPT "EnergyMeteringEGroupType", wie in Fig.7 referenziert, in der Schemasprache XSD. Hierbei wird mittels eines Attributes auf die Profil-Gruppen-Parameter-Semantik PGPS referenziert, hier "EnergyMeteringEType". Ein Beispiel einer Profil-Gruppen-Parameter-Semantik PGPS ist in Fig. 9 am Beispiel der Profil-Gruppen-Parameter-Semantik PGPS "EnergyMeteringEType" dargestellt, der die einzelnen, zu dem Profil gehörenden Parameter-Semantiken DPS1...DPSn in einer Liste enthält.

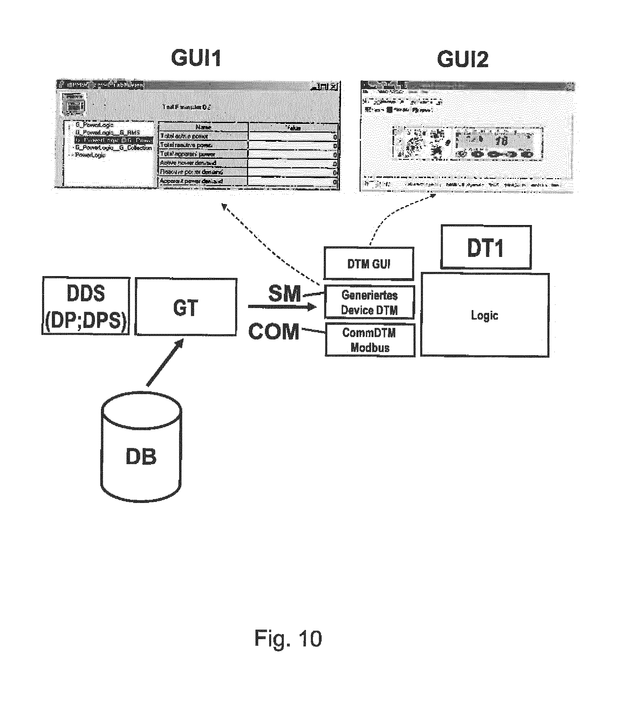

Fig. 10 zeigt rein schematisch eine mögliche Anwendung dieser Erfindung bei der aus der erweiterten Gerätebeschreibung DDS mittels eines Generierungswerkzeuges GT ein Software-Modul SM erzeugt wird unter Zuhilfenahme von definierten graphischen Objekten, die aufgrund der interpretierten Semantiken ausgewählt werden.

Die Gerätebeschreibungsdatei DDS, eine DDXML Datei, wird in das Generierungswerkzeug GT eingelesen. Das Generierungswerkzeug GT interpretiert anhand des Standes der Technik die Parameter der Gerätebeschreibungsdatei. Weiterhin interpretiert das Generierungswerkzeug GT nach dieser Erfindung die Parameter-Gruppen-Profile PGP, im Besonderen die Geräte-Parameter und deren Semantiken und verknüpft vorhandene graphische Objekte GO aus dem graphischen Portfolio der Datenbank DB, die den Semantiken entsprechen mit dem Software-Modul. Weiterhin ist es möglich, spezielle Algorithmen AL aus der Datenbank DB auf Basis der Semantiken auf die Parameter anzuwenden. Mittels der gemäß dem Stand der Technik automatisch hinzufügbaren graphischen Objekte GO und Algorithmen AL wird im nächsten Schritt ein Software-Modul SM, vorzugsweise ein Geräte-DTM, generiert.

Dieses Geräte-DTM kann nun, wie aus dem Stand der Technik bekannt, in der FDT-Rahmen-Applikation initialisiert werden. Dieses erzeugte Software-Modul SM beinhaltet nun gegenüber dem Stand der Technik eine erweiterte Logik sowie eine erweiterte graphische Oberfläche GUI2.

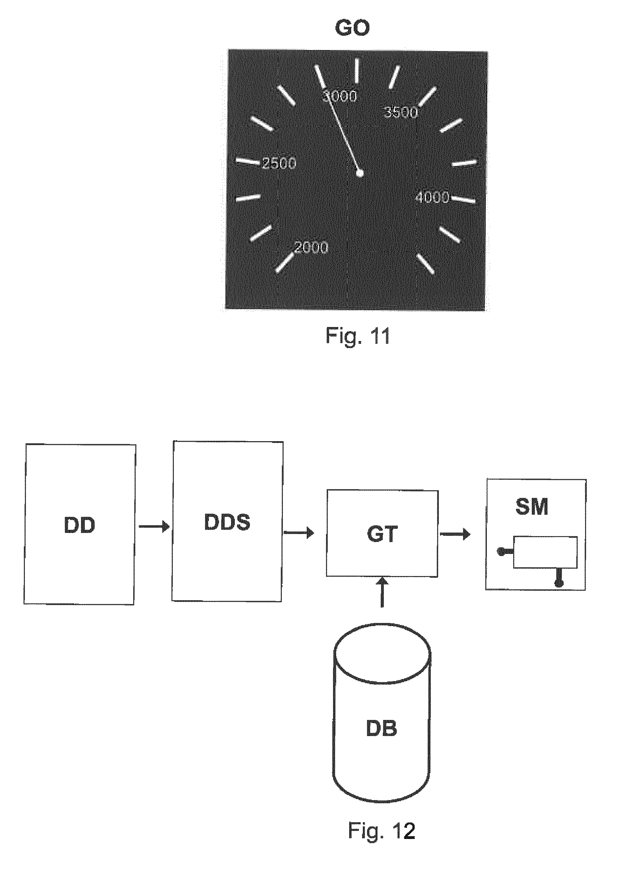

Fig. 11 zeigt beispielhaft ein graphisches Objekt GO, das aufgrund einer Interpretation der Parameter-Semantik zu dem Software-Modul SM hinzugefügt werden kann.

Ein Verfahren zur Generierung eines Software-Moduls SM in Form eines Geräte-DTMs aus einer Gerätebeschreibungsdatei DDS zeichnet sich dadurch aus, dass die Gerätebeschreibungsdatei DDS ein oder mehrere Parameter-Profile beinhaltet, welche Parameter DP1 ... DPn bzw. Gruppen von Parametern mit vordefinierten Semantiken umfasst und wobei das resultierende Geräte-DTM standardisierte Datenparameter enthält, mit einer standardisierten Weiterverarbeitung dieser Daten wie standardisierte grafische Darstellung.

Nachfolgend wird die Integration von Parameter-Semantiken DPS1 ... DPSn in Gerätebeschreibungen DDS zur automatisierten Weiterverarbeitung der beschriebenen Geräte-Parameter DP1...DPn beschrieben.

Durch das Hinzufügen von Parameter-Semantiken DPS1...DPn ist es möglich, erweiterte und verbesserte Software-Module SM wie Geräte-DTM zu generieren, die z. B. parameter-spezifische graphische Benutzeroberflächen GUI2 beinhalten, wie in Fig. 10 dargestellt.

Als Beispiel sei angeführt, das ein über ein Kommunikations-Protokoll übertragener Wert, z.B. "3000", unter Zuhilfenahme von dessen beschriebener Semantik z. B. "Geschwindigkeit", mittels eines speziell dafür vorgesehenen grafischen Objekts GO angezeigt werden kann, wie dies in Fig. 11 in Form einer Tacho-Anzeige dargestellt ist, die mittels der Semantik "Geschwindigkeit" erzeugt werden kann.

Eine erweiterte Generierung des Software-Moduls SM unter Verwendung von Parameter-Semantiken DPS1...DPSn kann wie in Fig. 12 gezeigt erfolgen. Die Standard-Gerätebeschreibung DD wird mittels Parameter-Semantiken DPS1...DPSn zu einer erweiterten Gerätebeschreibungsdatei DDS entwickelt. Durch die Gerätebeschreibung DDS mit integrierter Parameter-Semantik DPS1...DPSn wird mittels eines Generierungs-Tools GT das Software-Modul SM erstellt. Durch die Kenntnis der einzelnen Semantiken DPS1...DPSn, die z. B. in einer Datenbank DB abgelegt sind, kann das Generierungs-Tool GT den beschriebenen Geräte-Parametern GP ein festgelegtes graphisches Objekt GO zuordnen.

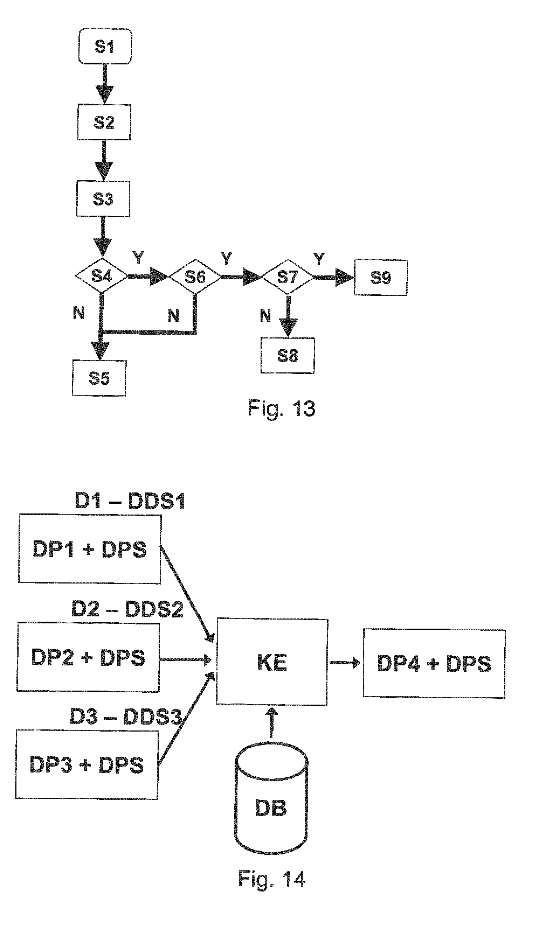

Dies geschieht, wie in Fig. 13 dargestellt, nach folgendem Ablaufschema:
1. Erweiterung der Gerätebeschreibung DD durch Parameter-Semantiken DPS1...DPSn in Schritt S1.
2. Ablegen der erweiterten Gerätebeschreibung DDS in einem dafür vorgesehenen Speicher in Schritt S2.
3. Einlesen der erweiterten Gerätebeschreibung DDS durch das Generierungs-Tool GT in Schritt S3.
4. Überprüfen der Gültigkeit der eingelesenen Gerätebeschreibung DDS in Schritt S4.
5. Ist die Gerätebeschreibung DDS ungültig, kann der Generierungsvorgang in Schritt S5 abgebrochen werden.
6. Bei Gültigkeit der Gerätebeschreibung DDS, wird in dieser eingelesenen Gerätebeschreibung DDS nach vorhandenen Parametern DP1...DPn gesucht, die mittels entsprechenden Kommunikationsprotokollen ausgetauscht werden können in Schritt S6.
7. Liegen keine auszutauschenden Parameter DP1...DPn vor, kann die Generierung in Schritt S5 abgebrochen werden.
8. Liegen entsprechende Parameter DP1...DPn vor, wird pro Parameter DP1...DPn überprüft, ob ebenfalls beschreibende Parameter-Semantiken DPS1...DPSn für diese Parameter DP1...DPn vorliegen in Schritt S7.
9. Liegt keine Parameter-Semantik DPS1...DPSn für den entsprechenden Parameter P1...Pn vor, wird dieser Parameter DP1...DPn wie bekannt in dem Software-Modul SM representiert in Schritt S8.
10. Liegt eine Parameter-Semantik DPS1...DPSn für den entsprechenden Parameter DP1...DPn vor, wird mittels einer zuvor definierten Art und Weise, z.B. abgelegt in einer Datenbank DB, der Parameter DP1...DPn in dem Software-Modul SM repräsentiert in Schritt S9. Dies kann z. B. ein der Semantik DS1...PSn entsprechendes graphisches Objekt GUI1...GUIn sein.

Durch diesen Ablauf können sowohl Parameter, die nach heutigem Stand der Gerätebeschreibungen beschrieben sind, als auch Parameter mit zusätzlicher Beschreibung der Semantik in einem Software-Modul abgebildet werden.

Die erfindungsgemäße Gerätebeschreibung ermöglicht eine automatische Interpretation und Weiterverarbeitung. Falls in einer Gerätebeschreibung DDS Parametern DP1...DPn eine Semantik DPS1...DPSn zugeordnet wird, ist es möglich, diese Parameter DP1...DPn auch entsprechend ihren Parameter-Semantiken DPS1...DPSn weiterzuverarbeiten. Als Beispiel sei die automatische Berechnung der Gesamtenergieaufnahme Eₜₒₜₐₗ erläutert, falls mittels erweiterten Gerätebeschreibungen DDS, erweitert durch Parameter-Semantiken DPS1...DPSn, den Parametern die Semantik "Energieaufnahme" zugeordnet ist. Parameterwerte mit der Semantik "Energieaufnahme" aus verschiedenen Geräten können so addiert werden, um die Gesamtenergieaufnahme dieser Geräte zu berechnen (Eₜₒₜₐₗ = E_{Gerät1} + E_{Gerät2} + E_{Gerät3} + etc.).

Dies ist schematisch in Fig. 14 dargestellt. Ein Gerät D1 beschreibt in einer erweiterten Gerätebeschreibung DDS1 einen Parameter DP1 und eine dem Parameter DP1 zugeordnete Parameter-Semantik DPS. Entsprechendes liegt für Gerät D2 und dessen Parameter DP2 sowie für den Parameter DP3 des Gerätes D3 vor. In einer Kontrolleinheit KE wird die erweiterte Gerätebeschreibung DDS1-DDS3 der Geräte D1-D3 ausgewertet unter Zuhilfenahme der beschriebenen Semantiken DPS aus z. B. einer Datenbank DB. Durch die Kenntnis der Semantik DPS der Parameter DP1-DP3 kann durch Berechnung ein neuer Parameter DP4 mit der Semantik DPS erzeugt werden.

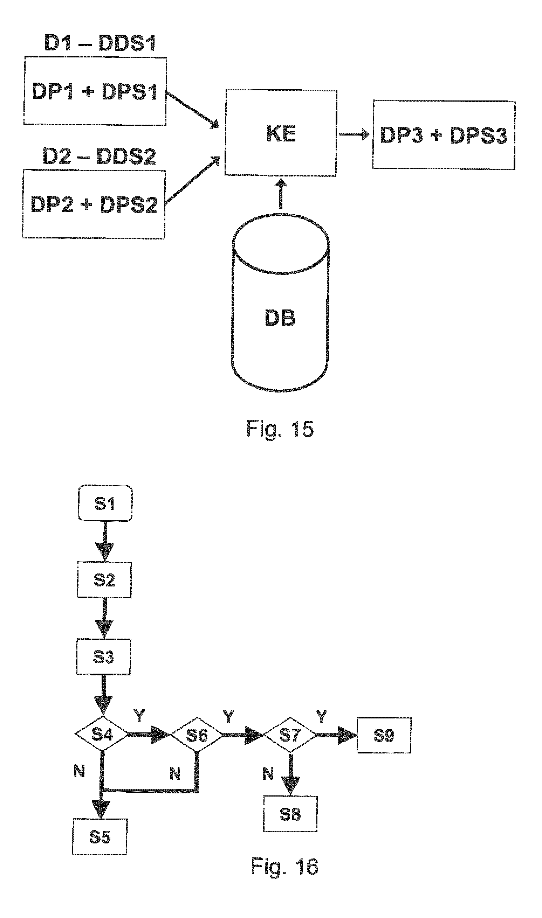

Ebenfalls ist es möglich, wie in Fig. 15 dargestellt, Parameter DP1, DP2 unterschiedlicher Semantiken DPS1, DPS2 zu verknüpfen. Als Beispiel sei die Berechnung der Geschwindigkeit (Parameter DP3 mit Semantik DPS3) angeführt, durch Kenntnis der zurückgelegten Wegstrecke (Parameter DP1 mit Semantik DPS1) und der dazu benötigten Zeit (Parameter DP2 mit Semantik DPS2).

Dies geschieht, wie in Fig. 16 dargestellt nach folgendem Ablauf:
1. Erweiterung der Gerätebeschreibung(en) DD durch Parameter-Semantiken DPS in Schritt S1.
2. Ablegen der erweiterten Gerätebeschreibung(en) DDS in einem dafür vorgesehenen Speicher in Schritt S2.
3. Einlesen der erweiterten Gerätebeschreibung(en) DDS durch die Kontrolleinheit KE in Schritt S3.
4. Überprüfen der Gültigkeit der eingelesenen Gerätebeschreibung(en) DDS in Schritt S4.
5. Ist/Sind die Gerätebeschreibung(en) DDS ungültig, kann keine Interpretation der Parameter DP vorgenommen werden und der Ablauf wird in Schritt S5 abgebrochen.
6. Bei Gültigkeit der Gerätebeschreibung(en) DDS, wird in dieser/diesen eingelesenen Gerätebeschreibung(en) DDS nach vorhandenen Parameter DP gesucht, die mittels entsprechenden Kommunikationsprotokolle ausgetauscht werden können in Schritt S6.
7. Liegen keine auszutauschenden Parameter DP vor, kann keine Interpretation der Parameter DP vorgenommen werden, da die beschriebenen Parameter DP nicht ausgelesen werden können. Dadurch endet der Ablauf in Schritt S5.
8. Liegen entsprechende Parameter DP vor, wird pro Parameter DP überprüft ob ebenfalls beschreibende Parameter-Semantiken DPS für diese Parameter DP vorliegen in Schritt S7.
9. Liegt keine Parameter-Semantik DPS für den entsprechenden Parameter DP vor, muss eine Weiterverarbeitung der Parameter DP manuell konfiguriert werden in Schritt S8.
10. Liegen entsprechende Parameter-Semantiken DPS für die jeweiligen Parameter DP vor, werden mittels einer zuvor definierten Art und Weise, z.B. abgelegt in einer Datenbank DB, die Parameter DP in der Kontrolleinheit KE weiterverarbeitet in Schritt S9.

## Patentansprüche

1. Verfahren zur Generierung eines Software-Moduls (SM) wie Geräte-DTM (DDTM) für ein Feldgerät (DT1, DT2, DT3) aus einer Gerätebeschreibungsdatei (DD), wobei in der Gerätebeschreibungsdatei (DD) Geräte-Parameter (DP) definiert sind und wobei das Software-Modul (SM) Daten und Funktionen des Feldgerätes (DT1, DT2, DT3) kapselt und grafische Bedienelemente bereitstellt und wobei das Software-Modul (SM) mittels eines Generator-Tool (GT) aus der Gerätebeschreibungsdatei (DD) generiert wird,
**dadurch gekennzeichnet,**
**dass** als Gerätebeschreibungsdatei (DD) eine erweiterte Gerätebeschreibungsdatei (DDS) verwendet wird, in der für einen oder mehrere Geräte-Parameter (DP) der Gerätebeschreibungsdatei (DD) jeweils eine definierte Geräte-Parameter-Semantik (DPS) zugeordnet ist, dass die erweiterte Gerätebeschreibungsdatei (DDS) durch das Generator-Tool (GT) ausgewertet wird, wobei für jeden Geräte-Parameter (DP) geprüft wird, ob eine Geräte-Parameter-Semantik (DPS) vorliegt, dass die Geräte-Parameter-Semantiken (DPS) der Geräte-Parameter (DP) mittels des Generator-Tools (GT) ausgewertet werden und dass entsprechend der Geräte-Parameter-Semantiken (DPS) ein Parameter-Semantik-spezifisches Software-Modul (SM) generiert wird.

2. Verfahren nach Anspruch 1,
**dadurch gekennzeichnet,**
**dass** jeder Geräte-Parameter-Semantik (DPS) oder einer Gruppe von Geräte-Parameter-Semantiken eine Information (GO, AO, AL) zugordnet ist, die vorzugsweise in einer Datenbank (DB) abgelegt ist, und dass das Generator-Tool (GT) zur Generierung des Parameter-Semantik-spezifischen Software-Moduls (SM) in Form eines Geräte-DTMs die dem Geräte-Parameter (DP) zugeordnete Information abruft.

3. Verfahren nach Anspruch 1 oder 2,
**dadurch gekennzeichnet,**
**dass** die der Geräte-Parameter-Semantik (DPS) oder einer Gruppe von Geräte-Parameter-Semantiken zugeordnete Information (GO, AO, AL) ein grafisches Objekt (GO) und/oder ein akustisches Objekt (AO) und/oder ein Algorithmus (AL) ist.

4. Verfahren nach zumindest einem der vorhergehenden Ansprüche,
**dadurch gekennzeichnet,**
**dass** das grafische Objekt (GO) eine parameter-semantik-spezifische Benutzeroberfläche (GUI1, GUI2, GUI3) ist.

5. Verfahren nach zumindest einem der vorhergehenden Ansprüche,
**dadurch gekennzeichnet,**
**dass** der Algorithmus (AL) einen oder mehrere Parameter in Abhängigkeit ihrer Parameter-Semantik mathematisch miteinander verknüpft.

6. Verfahren nach zumindest einem der vorhergehenden Ansprüche,
**dadurch gekennzeichnet,**
**dass** die Geräte-Parameter (DP) entsprechend ihrer Geräte-Parameter-Semantik (DPS) in einer Kontrolleinheit (KE) mathematisch verknüpft werden.

7. Verfahren nach zumindest einem der vorhergehenden Ansprüche,
**dadurch gekennzeichnet,**
**dass** für jeden Geräte-Parameter (DP) der erweiterten Gerätebeschreibungsdatei (DDS) überprüft wird, ob eine entsprechende Geräte-Parameter-Semantik (DPS) in der Gerätebeschreibungsdatei (DDS) enthalten ist und dass dann, wenn eine Geräte-Parameter-Semantik (DPS) nicht enthalten ist, eine manuelle Konfiguration des Geräte-Parameters (DP) erfolgt oder standardmäßig in dem Geräte-DTM (DDTM) repräsentiert wird.

8. Gerätebeschreibungsdatei (DDS) zum Abbilden von Geräte-Parametern (DP) eines Feldgerätes (DT1, DT2, DT3) in einem Software-Modul (DTM) wie Geräte-DTM (DDTM) mittels eines Generator-Tools (GT), wobei in der Gerätebeschreibungsdatei (DDS) Geräte-Parameter (DP) definiert sind,
**dadurch gekennzeichnet,**
**dass** einem oder mehreren der Geräte-Parameter (DP1...DPn) eine definierte Geräte-Parameter-Semantik (PS1...PSn) zugeordnet ist.

9. Gerätebeschreibungsdatei nach Anspruch 8,
**dadurch gekennzeichnet ,**
**dass** die Gerätebeschreibungsdatei (DDS) die vordefinierten Geräte-Parameter-Semantiken (DPS1...DPSn) oder Gruppen von Geräte-Parametern-Semantiken (PGP1...PGPn) in Form eines Parameter-Profils (PGP) aufweist.

10. Gerätebeschreibungsdatei nach zumindest einem der vorhergehenden Ansprüche,
**dadurch gekennzeichnet,**
**dass** die Daten eines Parameter-Profils (PGP) durch ein ergänzendes Profil-Schema (PSD), eine Dokument-Typ-Definition (DTD) und/oder eine Gerätebeschreibung generierende Applikation beschrieben werden bzw. eingeschränkt sind.

11. Gerätebeschreibungsdatei nach zumindest einem der vorhergehenden Ansprüche,
**dadurch gekennzeichnet,**
**dass** die Gerätebeschreibungsdatei (DDS) Profil-Schemata (PSD) heranzieht, welche durch die Gerätebeschreibungsdatei (DDS) unterstützt werden.

12. Gerätebeschreibungsdatei nach zumindest einem der vorhergehenden Ansprüche,
**dadurch gekennzeichnet,**
**dass** die Gerätebeschreibungsdatei (DDS) ergänzend durch ein XML-Schema (XSD), ein DTD und/oder das Engineering-Tool beschrieben ist.

13. Gerätebeschreibungsdatei nach zumindest einem der vorhergehenden Ansprüche,
**dadurch gekennzeichnet,**
**dass** die Gerätebeschreibungsdatei (DDS) als XML-Datei oder ASCII-Datei erstellt ist.

14. Gerätebeschreibungsdatei nach zumindest einem der vorhergehenden Ansprüche,
**dadurch gekennzeichnet,**
**dass** die Parameter-Profile (PGP) als XML-Element oder ASCII-Element in die Gerätebeschreibungsdatei (DDS) eingefügt sind.

15. Gerätebeschreibungsdatei nach zumindest einem der vorhergehenden Ansprüche,
**dadurch gekennzeichnet,**
**dass** Daten-Parameter-Semantiken festgelegt und aus einer Datenliste ausgewählt sind.

16. Gerätebeschreibungsdatei nach zumindest einem der vorhergehenden Ansprüche,
**dadurch gekennzeichnet,**
**dass** die Parameter-Profile (PGP) in einer Datei spezifiziert sind oder dass jedes Parameter-Profil in einer separaten Datei spezifiziert ist.
